# EUROPEAN PATENT SPECIFICATION

(11) **EP 3 748 543 B1**
(45) Date of publication and mention of the grant of the patent: **12.07.2023**
(21) Application number: 20188330.3
(22) Date of filing: 22.09.2015
(51) Int. Cl.: G06K 19/077

(54) **HYBRID METAL SMARTCARDS**
HYBRIDE METALL-CHIPKARTEN
CARTES À PUCE MÉTALLIQUES HYBRIDES

(30) Priority: 22.09.2014 US 201414492113; 08.10.2014 US 201462061689 P; 16.11.2014 US 201462080332 P; 24.11.2014 US 201414551376; 11.02.2015 US 201514619177; 23.03.2015 US 201562136644 P; 21.04.2015 US 201562150307 P; 19.05.2015 US 201562163962 P; 14.06.2015 US 201562175308 P; 06.08.2015 US 201562201578 P; 13.08.2015 US 201562204466 P
(43) Date of publication of application: 09.12.2020
(62) Divisional of application: 15767148.8
(73) Proprietor: FÉINICS AMATECH TEORANTA, Dublin 16, D16 X8C3 (IE)
(72) Inventor: Lotya, Mustafa, Celbridge, County Kildare (IE); Finn, David, Tourmakeady, County Mayo (IE); Molloy, Darren, Boula Hedford, County Galway (IE)
(74) Representative: Cremer & Cremer

(56) References cited:
- WO-A1-99/65002
- WO-A1-2013/110625
- US-A- 5 673 179
- US-A1- 2012 104 104
- US-A1- 2014 209 691

## Description

### TECHNICAL FIELD

The disclosure relates to hybrid metal smartcards, smartcards being RFID devices having RFID (radio frequency identification) chips or chip modules (CM) capable of operating in a "contactless" mode (ISO 14443 or NFC/ISO 15693), including dual interface (DI) smartcards which can also operate in "contact" mode (ISO 7816-2) and, more particularly, to antenna modules (AM), transponder chip modules (TCMs), Coupling Frames (CFs), or Transponder Chip Modules (TCMs), including transponder chip modules with integrated Coupling Frame (CF), suitable for implanting, embedding, insertion or placement in smartcards.

The techniques disclosed herein, although not claimed, may also be applicable to RFID devices including "non-secure smartcards and tags" such as contactless cards in the form of keycards, medic-alert tags, access control cards, security badges, key-fobs, wearable devices, mobile phones, tokens, small form factor tags, data carriers and the like operating in close proximity with a contactless reader.

### BACKGROUND

A smartcard is an example of an RFID device that has a transponder chip module (TCM) or an antenna module (AM) disposed in a card body (CB) or inlay substrate.

The antenna module (AM) or antenna chip module, which may be referred to as a transponder chip module (TCM) may generally comprise:
- a module tape (MT) or chip carrier tape (CCT), more generally, simply a support "substrate";
- an RFID chip (CM, IC) which may be a bare, unpackaged silicon die or a chip module (a die with leadframe, interposer, carrier or the like), typically disposed on a "face-down side" or "bond side" or "chip side" (or surface) of the module tape (MT);
   -- the RFID chip may have an antenna integrated therein, but generally a module antenna (MA) is typically required to effect contactless communication between the RFID chip and another RFID device such as an external contactless reader;
- a module antenna (MA) or antenna structure (AS), typically disposed on the same face-down side of the module tape (MT) as the RFID chip (IC), and connected therewith, for implementing a contactless interface, such as ISO 14443 and NFC/ISO 15693 with a contactless reader or other RFID device.

When operating in a contactless mode, a passive antenna module (AM) or transponder chip module (TCM) may be powered by RF from an external RFID reader, and may also communicate by RF with the external RFID reader.

A dual-interface antenna module (AM) or transponder chip module (TCM) may also have a contact pad array (CPA), typically comprising 6 or 8 contact pads (CP, or "ISO pads") disposed on a "face-up side" or "contact side" (or surface) of the module tape (MT), for interfacing with a contact reader in a contact mode (ISO 7816). A connection bridge (CBR) may be disposed on the face-up side of the tape for effecting a connection between two components such as the module antenna and the RFID chip on the other face-down side of the module tape.

A conventional antenna module (AM) or transponder chip module (TCM) may be generally rectangular, having four sides, and measuring approximately 8.2mm x 10.8mm for a 6-contact module and 11.8mm x 13.0mm for an 8-contact module. As disclosed herein, a generally rectangular transponder chip module (TCM) may have a larger or smaller form factor than a conventional transponder chip module (TCM). Alternatively, the transponder chip module (TCM) may be round, elliptical, or other non-rectangular shape.

A module antenna (MA) may be disposed on the module tape (MT) for implementing a contactless interface, such as ISO 14443 and NFC/ISO 15693. Contact pads (CP) may be disposed on the module tape (MT) for implementing a contact interface, such as ISO 7816. The module antenna (MA) may be wire-wound, or etched, for example:
- The module antenna (MA) may comprise several turns of wire, such as 50µm diameter insulated wire. Reference may be made to US 6,378,774 (2002, Toppan), for example FIGs. 12A, B thereof.
- The module antenna (MA) may be a chemically-etched planar antenna (PA) structure. Reference may be made to US 8,100,337 (2012, SPS), for example FIG. 3 thereof.
- The module antenna (MA) may comprise a laser-etched planar antenna (PA) structure (LES). Reference may be made US 20140284386**.**

A planar antenna (PA) structure, or simply "planar antenna (PA)", whether chemically-etched (CES) or laser-etched (LES) is a type of antenna structure (AS) and may comprise a long conductive trace or track having two ends, in the form of a planar, rectangular spiral, disposed in an outer area of a module tape (MT), surrounding the RFID chip on the face-down side of the module tape. This will result in a number of traces or tracks (actually, one long spiraling trace or track), separated by spaces (actually, one long spiraling space). The track (or trace) width may be approximately 100µm. The planar antenna may be fabricated on other than the module tape, such as on a separate substrate, and joined to the module tape.

A module antenna (MA) connected to an RFID chip (CM), typically on a substrate or module tape (MT), may be referred to as a "transponder chip module", or simply as a "transponder", or as a "module". Reference may be made to US 20150136858**,** US 20140361086 and US 20150021403**.**

WO 2013/110625 discloses metallized smartcards. The face plate of a smartcard built by stacking different layers is made of metal or metallized. To at least partially overcome attenuation of the RF signal the opening wherein the TCM is placed is enlarged. Further, in one of the embodiments the metal layer is perforated and these perforations are filled with a non-metallic material, such as plastics.

US 20140209691 A1 discloses deposition of magnetic material and producing a pre-laminated stack of shielding layers for offsetting attenuation of RF caused by a metal face plate of a smartcard or a metallized layer near a passive transponder. Some embodiments show smartcards having a metal card body. Magnetic shielding material is disposed between the metal layer and a booster antenna to shield the booster antenna. The smartcards described only work with a booster antenna amplifying the signal of the module antenna.

### SUMMARY

It is an object of the invention to provide improved coupling of hybrid metal smartcards with a contactless reader.

The invention is defined in the claims, claim 1 claiming a hybrid metal smartcard.

As used herein, a transponder chip module (TCM) may generally comprise an RFID chip and a module antenna disposed on one (face-down) side of a module tape, and contact pads on an opposite (face-up) side of the module tape. In the main, hereinafter, discussions may be directed to passive transponder chip modules operating primarily or exclusively in a contactless mode (e.g., ISO 14443, 15693). However, the techniques disclosed herein may be applicable to dual-interface transponder chip modules capable of operating in both contactless and contact modes (e.g., ISO 7816).

Herein, generally, RFID devices comprise (i) a transponder chip module (TCM) having an RFID chip (IC) and a module antenna (MA), and (ii) a coupling frame (CF) having a slit (S). The metal card body features a slit so that it functions as a coupling frame. The slit overlaps at least a portion of the module antenna.

Coupling frames (CF) in combination with transponder chip modules (TCMs) may provide for capacitive coupling with a contactless reader or point of sale terminal, or another RFID device. Coupling frames (CF) in combination with transponder chip modules (TCMs) may enhance (including enable) contactless communication between

As used herein, a "coupling frame" (CF) is a metal card body with an electrical discontinuity such as in the form of a slit (S) or a non-conductive stripe extending from an outer edge thereof to an inner position thereof, the coupling frame capable of being oriented so that the slit (S) overlaps (crosses-over) the module antenna (MA), such as on at least one side thereof. The slit may be straight, and may have a width and a length. The slit extends to an opening (MO) for accepting the transponder chip module. The coupling frame (CF) may also comprise a conductive path or a track of wire formed around the transponder chip module (TCM), such as by embedding wire. The coupling frame may be planar or three dimensional (such as a curved surface). The coupling frame for capacitive coupling with a reader may couple with either a passive or an active transponder chip module.

The overlap of the slit with the module antenna may be less than 100%. In addition, the width and length of the slit can significantly affect the resonance frequency of the system and may be used as a tuning mechanism. As the width of slit changes, there is a resulting change in the overlap of the slit with the antenna.

In use, the coupling frame is disposed in close proximity to a transponder chip module so that the slit (or other discontinuity) overlaps at least a portion of the module antenna of the transponder chip module, so that the coupling frame enhances (including enables) coupling between the transponder chip module and another RFID device such as a contactless reader. When the slit is not overlapping the antenna, communication with the transponder chip module may be suppressed (or inhibited, including disabled). The coupling frame constitutes the entire body of a metal smart card.

In order to satisfy communication requirements for a given smartcard application, in terms of maximum communication read/write range for example, the chip (IC) must have a minimum power level delivered to it. The module antenna (MA) inductance, resistance and capacitance all affect the power level delivered to the chip (IC); at the maximum communication distance from the reader antenna, the module antenna (MA) is delivering the minimum chip (IC) power level. The better the performance of a given module antenna (MA) with a given chip (IC), the greater the maximum communication distance of the transponder chip module (TCM) with respect to the reader antenna.

The slit (S) of the coupling frame (CF) may cover at least a substantial portion of an entire central area of the module antenna, including at least 50%, at least 60%, at least 90%, and at least 100% thereof.

Some features may include:
- the coupling frame has a slit extending from an outer edge to an inner position thereof, and overlaps at least a portion, such as the traces on one side of the module antenna, extending into the trace-free interior area ("no man's land") of the module antenna. The slit may be straight, L-shaped, T-shaped and the like. The width and length of the slit may be established with respect to the dimensions of the no-man's land, and the slit may overlap some turns on other sides of the antenna.

The improvements disclosed herein may enhance the power delivery to an RFID chip connected to a planar antenna with a confined surface area forming a transponder chip module, to improve on the read/write range with a contactless point of sale terminal.

This disclosure also relates to passive RFID devices operating on the combined principle of capacitive and inductive coupling to effectuate data communication and harvest energy with and from a contactless reader and to drive active elements, in particular for integration into payment and identification objects.

This disclosure also relates to metal cards produced through additive manufacturing including sintering, said metal cards modified to function as coupling frames. Metals such as gold, sterling silver, titanium and brass, and insulating materials such as polyamide, ABS, resin, ceramics and rubber may be 3D printed in combination.

Other objects, features and advantages of the invention(s) disclosed herein, and their various embodiments, may become apparent in light of the descriptions of some exemplary embodiments that follows.

### BRIEF DESCRIPTION OF THE DRAWINGS

Reference will be made in detail to embodiments of the disclosure, non-limiting examples of which may be illustrated in the accompanying drawing figures (FIGs). Some figures may be in the form of diagrams. Some elements in the figures may be exaggerated, others may be omitted, for illustrative clarity.

Any text (legends, notes, reference numerals and the like) appearing on the drawings are incorporated by reference herein.

Some elements may be referred to with letters ("AM", "BA", "CB", "CCM", "CM", "MA", "MT", "PA", "TCM", etc.) rather than or in addition to numerals. Some similar (including substantially identical) elements in various embodiments may be similarly numbered, with a given numeral such as "310", followed by different letters such as "A", "B", "C", etc. (resulting in "310A", "310B", "310C"), and variations thereof, and may be collectively (all of them at once) or individually (one at a time) referred to simply by the numeral ("310").

Some of the drawings may omit components such as the transponder chip module or module antenna, for illustrative clarity. Some of the figures may show only components of an RFID device, such as coupling frames.
**FIG. 1** is a diagram (cross-sectional view) of an example not being part of the invention and being included for illustration purposes of a dual-interface smart card (SC) and readers.
**FIG. 2A** is a diagram (cross-sectional view) illustrating a coupling frame in a card body of a smart card, the diagram being for illustration purposes.
**FIG. 2B** is a diagram (partial perspective view) illustrating smart card having a metal card body modified to function as a coupling frame.
**FIG. 3A** is a diagrammatic view of a front surface of a smart card (SC) being a metal card or composite metal card having a slit (S) to function as a coupling frame (CF).
**FIG. 3B** is a plan view of the back side of the smart card shown in **FIG. 3A****,** showing incorporating a switch to short out the slit (S) in the card body (CB).
**FIG. 3C** is a plan view of a hybrid metal smart card, which may be a credit card.
**FIG. 3D** is a perspective view (exploded) of a hybrid ceramic and metal smart card.
**FIGs. 5A****, B** are two perspective views (front and back) of a metal card body MCB having a cavity (MO) for a transponder chip module (TCM, not shown), and a slit S extending from the cavity to an outer edge of the metal card body.
**FIG. 5C** is a perspective view showing a metal card body (MCB) having a cavity (MO), but rather than the cavity being entirely open at the bottom, portions of the card body which may be referred to as struts may be left in place, spanning the cavity, to reinforce the card body.
**FIG. 11A** is a diagram (plan view) of a smart card (exemplary of payment objects) having a transponder chip module with a coupling frame for capacitively coupling with an external reader, and an LED (or LED module) in the same coupling frame.
**FIGs. 13A** (perspective view) and **13B** (top plan view) show a payment object in the form of a bracelet having a wristband with an L-shaped slit to function as a coupling frame, the example not being claimed but being illustrative for a payment object having an L-shaped slit.
**FIG. 32** is a plan view of a transponder chip module (TCM) having an U-shaped module antenna (MA).

### DETAILED DESCRIPTION

Various embodiments (or examples) may be described to illustrate teachings of the invention(s), and should be construed as illustrative rather than limiting. It should be understood that it is not intended to limit the invention(s) to these particular embodiments. It should be understood that some individual features of various embodiments may be combined in different ways than shown, with one another. Reference herein to "one embodiment", "an embodiment", or similar formulations, may mean that a particular feature, structure, operation, or characteristic described in connection with the embodiment is included in at least one embodiment of the present invention. Some embodiments may not be explicitly designated as such ("an embodiment").

The embodiments and aspects thereof may be described and illustrated in conjunction with systems, devices and methods which are meant to be exemplary and illustrative, not limiting in scope. Specific configurations and details may be set forth in order to provide an understanding of the invention(s). However, it should be apparent to one skilled in the art that the invention(s) may be practiced without some of the specific details being presented herein. Furthermore, some well-known steps or components may be described only generally, or even omitted, for the sake of illustrative clarity. Elements referred to in the singular (e.g., "a widget") may be interpreted to include the possibility of plural instances of the element (e.g., "at least one widget"), unless explicitly otherwise stated (e.g., "one and only one widget").

In the following descriptions, some specific details may be set forth in order to provide an understanding of the invention(s) disclosed herein. It should be apparent to those skilled in the art that these invention(s) may be practiced without these specific details. Any dimensions and materials or processes set forth herein should be considered to be approximate and exemplary, unless otherwise indicated. Headings (typically underlined) may be provided as an aid to the reader, and should not be construed as limiting.

Reference may be made to disclosures of prior patents, publications and applications. Some text and drawings from those sources may be presented herein, but may be modified, edited or commented to blend more smoothly with the disclosure of the present application. Citation or identification of any reference should not be construed as an admission that such reference is available as prior art to the disclosure.

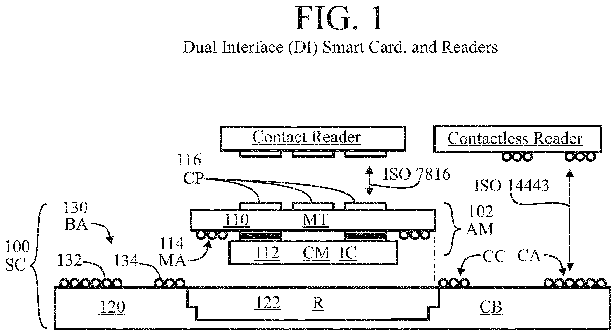

**FIG. 1** is a diagram (cross-sectional view) of a conventional prior-art dual-interface smart card (SC) and readers, as exemplary of an RFID device. This RFID device is "dual interface" since it can interact either with external contact readers (e.g., ISO 7816) or with contactless readers (e.g., ISO 14443, 15693).

**FIG. 1** illustrates a smart card SC (100) in cross-section, along with a contact reader (e.g., ISO 7816) and a contactless reader (e.g., ISO 14443). An antenna module (AM, or transponder chip module TCM) 102 may comprise a module tape (MT) 110, an RFID chip (CM or IC) 112 disposed on one side (face-down) of the module tape MT along with a module antenna (MA) 114 for interfacing with the contactless reader. The antenna module (AM) may comprise contact pads (CP) 116 disposed on the other (face-up) side of the module tape (MT) for interfacing with the contact reader. The card body (CB) 120 comprises a substrate which may have a recess (R) 122 extending into one side thereof for receiving the antenna module (AM). (The recess R may be stepped - such as wider at the surface of the card body (CB) - to accommodate the profile of the antenna module AM.) The booster antenna (BA) 130 may comprise turns (or traces) of wire (or other conductor) embedded in (or disposed on) the card body CB, and may comprise a number of components such as (i) a card antenna (CA) component 132 and (ii) a coupler coil (CC) component 134. It may be noted that, as a result of the recess R being stepped, a portion of the card body (CB) may extend under a portion of the antenna module (AM), more particularly under the module antenna (MA).

In the main, hereinafter, RFID devices having only a contactless interface (and not having a contact interface) may be described. In the main, hereinafter, RFID devices having a coupling frame rather than a booster antenna are described.

### Some Definitions

As used herein, a transponder chip module TCM, which may be referred to simply as a "transponder", is typically a component of an RFID device such as a smartcard, or a payment object and may comprise (i) a support substrate or module tape MT, (ii) an RFID chip (IC, CM) and (iii) a module antenna (MA), connected with the RFID chip. The transponder chip module may be referred to in some descriptions simply as the "module" or as the "transponder". It may also sometimes be referred to as an antenna module (AM) or antenna chip module

A transponder chip module may be capable of communicating at least contactlessly (e.g., ISO 14443, 15693) with another RFID device such as an external contactless reader (such as at a point of sale terminal). The RFID chip in the transponder may also support a contact interface (e.g., ISO 7816), resulting in a dual-interface module.

A transponder may be a "passive" transponder which does not have its own power source (e.g., battery), but rather which receives (harvests) its operating power from an external reader (interrogator) rather than, for example, from a battery. An "active transponder" may have its own internal power source, such as a battery. A battery-assisted passive device may have a small battery on board and is activated when in the presence of an RFID reader.

The module antenna (MA) may be planar antenna structure comprising a single long conductive track having two ends connected with corresponding two terminals of the RFID chip. The module antenna may be laid out in a spiral pattern comprising several (such as 10-15) "traces" (sometimes referred to as "tracks"), separated by spaces (sometimes referred to as "gaps"). The module antenna may be formed by etching (either chemical etching or laser etching) of a conductive layer on the module tape (or a conductive foil applied to the module tape). The track (or trace) width may be approximately 100µm, and may vary from end-to-end. The gap width may be approximately 25µm and may vary along the length of the module antenna. The overall length of the module antenna may be approximately 400mm. The traces of the module antenna may sometimes be referred to as windings since the module antenna MA (or antenna structure AS) is analogous to a wire-wound antenna. The techniques disclosed herein may also be applicable to module antennas which are wire-wound or formed by embedding wire, having a number of turns and two ends.

The module antenna may be disposed as a single long conductive track which may be in the form of a rectangular spiral disposed in a generally rectangular path or band around a peripheral annular area of the module tape. An annulus is a plane figure consisting of the area between a pair of concentric circles - i.e., the area inside the outer circle and outside the inner circle). A square annulus is the planar shape contained between two concentric axis-parallel squares, i.e., two squares with a common center whose sides are parallel to the x- and y-axes. The annular area occupied by the module antenna may be rectangular, or other than rectangular, such as square or circular. In the examples described herein, the module antenna typically resides in a generally square rectangular annular area, and the module antenna may be considered to have four "sides".

The module antenna (or simply "antenna", or "planar antenna", or "antenna structure", or "laser-etched antenna structure") may be disposed on the same face-down side of the module tape as the RFID chip. The RFID chip may be disposed in a central area of the module tape which is devoid of antenna traces, and which may be referred to as "no man's land". The RFID chip may be disposed on an opposite side of the module tape from the module antenna.

Additional antenna structures such as a second module antenna or capacitive stubs may be connected with the module antenna. See US 8474726**.** In no-man's land, a metal foil or layer (or cladding), on either side of the module tape may be segmented, as disclosed for example in US 14619177**.**

The traces on a given side of the module antenna may be modified so that the turns thereof extend inward into the no-mans land, typically to relocate an outer end of the module antenna closer to the RFID chip for connecting (such as by wire bonding) thereto. This may result in one side of the module antenna being U-shaped. See US 14619177**.** See WO 2014016332 (2014-01-30, Linxens Holding).

Magnetic materials may be used to increase the effective size of an RFID antenna and the concentration of magnetic flux. As used herein, "magnetic particles" may refer to particles that are conductive, having a resistance of hundreds of ohms, in contrast with ferrite particles. The materials may be performed by sintering or high pressure lamination (with or without an additional binder) into a size approximately matching the internal area of the antenna. The magnetic material may comprise ferrites or conductive non-ferrites (having a resistance of hundreds of ohms). The magnetic material may in the form of flakes of the order of a hundred microns in lateral size and a few microns in thickness. The magnetic material, once formed into a suitable shape, may be deposited or placed in the plane of the antenna or adjacent to the antenna. In addition, such magnetic material may be used in conjunction with a coupling frame whereby the magnetic material is placed over some or all of the coupling frame in order to redirect magnetic flux lines and improve the performance of the TCM.

### Coupling Frames

According to the invention, the booster antenna in an RFID device is eliminated, or replaced by a "coupling frame" (CF). Generally, the overall function of both a booster antenna and a coupling frame are to enhance (improve) coupling and communication between a transponder chip module (TCM) and an external contactless reader (or with another RFID device).

According to the invention the metal card body of a hybrid metal smartcard functions as a coupling frame.

As used herein, a coupling frame (CF) may generally comprise a conductive, planar surface or element having an outer edge, and discontinuity such as a slit (S) or a non-conductive stripe extending from the outer edge of the conductive surface to an interior position thereof. The coupling frame may be a curved surface, rather than being planar.

The slit may be referred to as a slot or a gap.

In use, a coupling frame is disposed closely adjacent to (in close proximity, or juxtaposed with) a transponder chip module (TCM) having a module antenna (MA) so that the slit (S) overlaps (traverses, over or under) at least a portion of the module antenna. For example, the slit (S) may extend from a position external to the module antenna, crossing over (or overlapping) at least some of the traces of the module antenna, such as extending over all of the traces on one side of the module antenna and may further extend into the interior area (no-man's land) of the module antenna.

In use, the coupling frame CF is positioned so that the slit S overlaps or traverses at least some of the traces of the module antenna MA on at least one side thereof. The slit S may extend at least partially, including completely across only one side of the module antenna, and may extend further across a central area ("no-mans land") of the module antenna (devoid of traces) to the opposite side of the module antenna. The coupling frame and the module antenna may both be substantially planar, positioned very close together, parallel with one another, and separated by an air gap or dielectric layer which may be no greater than 100µm, 50µm or 20µm. Generally, the closer the coupling frame is to the module antenna (smaller separation), the better the communication (such as read/write performance) with the external contactless reader will be. With increasing separation distance, the read/write performance may degrade.

The coupling frame may enhance communication (signal, power) between an external contactless reader and the transponder chip module when the slit is positioned across (to traverse) the traces of the module antenna on at least one side thereof.

### Incorporating Coupling Frames into RFID devices

According to the invention, generally, a transponder chip module (with or without its own coupling frame) can be incorporated into an RFID device, namely a smartcard. The device may constitute a passive transponder.

An entire metal card body of a metal smart card is provided with a slit (S, or other discontinuity) to function as a coupling frame.

The slit (S) in a coupling frame may be linear (straight), and may have a width of approximately 1-2mm and a length of approximately 8-13mm, but may have other dimensions and form factors. The slit (S) may be arranged to overlap (traverse) the traces of the module antenna at 90° thereto, or at another angle. The slit (S) may be other than straight.

It should be understood that the coupling frame may be on a different plane than the module antenna. The slit of the coupling frame may overlap or traverse at least some outer turns (or traces) of the module antenna on one side thereof, including overlapping all of the turns of the module antenna on the one side thereof and extending into (above) the inner area (no-mans land) of the module antenna. The slit may be long enough to overlap one or more turns of the module antenna on an opposite side of the module antenna. The slit may be wide enough to overlap one or more inner turns of the module antenna on one or both adjacent side(s) of the module antenna.

A transponder chip module (with or without its own coupling frame) can be incorporated into an RFID device which is a smartcard.

### Smart Card with Coupling Frame

US 20140361086 discloses a conductive coupling frame (CF) having two ends, forming an open loop, disposed surrounding and closely adjacent a transponder chip module (TCM), and substantially coplanar with an antenna structure (AS, LES) in the transponder chip module (TCM). A metal card body (MCB) having a slit (S) extending from a module opening (MO) to a periphery of the card body to function as a coupling frame (CF). The coupling frame (CF) may be thick enough to be non-transparent to RF at frequencies of interest. A switch may be provided to connect ends of the coupling frame (CF) across the slit (S). The transponder chip module (TCM) may comprise a module antenna (MA) which may be a laser-etched antenna structure (LES) and a non-perforated contact pad (CP) arrangement.

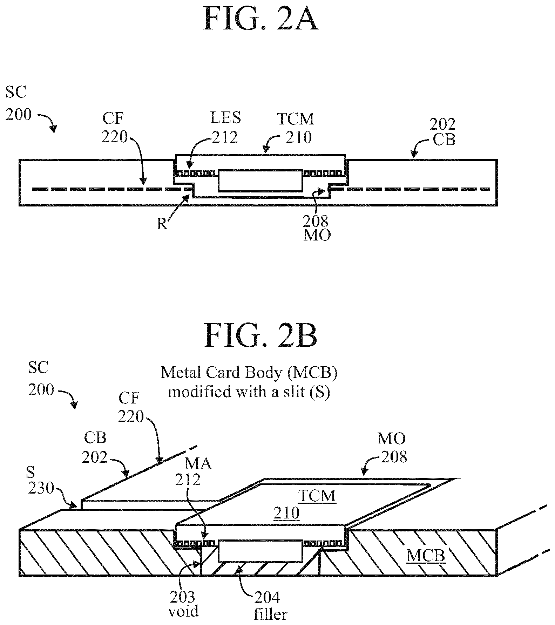

**FIG. 2A** shows an example which is not part of the invention of a smart card 200 with a coupling frame (CF) 220 incorporated into its card body (CB) 202 which has a stepped recess (R). A transponder chip module (TCM) 210 has a planar antenna (PA) which may be a laser-etched antenna structure (LES) 212. The coupling frame (CF) has an opening (MO) 208 for receiving the transponder chip module (TCM). The coupling frame (CF) may have a slit (not visible) extending from the opening (MO) to an outer edge of the coupling frame (CF). The dashed line indicates, schematically, that the coupling frame may comprise a metal layer in a stackup of a card body. An inner edge of the coupling frame (CF) may overlap (or underlie) at least some outer turns of the module antenna (MA), which may be a planar antenna (PA) which is laser-etched antenna structure (LES) in the transponder chip module (TCM). Viewed from another perspective, an outer portion of the module antenna (MA may overhang an inner portion of the coupling frame (CF). The coupling frame (CF) may enhance communication between the transponder chip module and another RFID device such as a contactless reader. The transponder chip module may be dual-interface, supporting both contactless and contact communication with external readers.

**FIG. 2B** illustrates a transponder chip module (TCM) 210 disposed in the card body (CB) 202 of a metal smartcard (SC) 200, or metal card (MC), wherein substantially the entire card body (e.g., 760µm thick) comprises metal, and may be referred to as a metal card body (MCB). The transponder chip module (TCM) may reside in an opening (MO) 208 extending completely through the card body. The opening is stepped, having a larger area portion and smaller area portion, as shown. This results in a void 203 behind the transponder chip module (TCM), and the void is filled with non-conductive filler 204. In a conventional metal smart card (not having a slit to function as a coupling frame), the void behind the transponder chip module may allow electromagnetic radiation from an external reader to interact with the transponder chip module.

A slit (S) 230 extends from an outer edge of the metal card body (MCB) to the opening (MO) and may overlap (underneath, as viewed) an outer portion of the module antenna (MA) 212 which may be a laser-etched antenna structure (LES). The slit (S) modifies the metal card body (MCB), allowing it to operate as a coupling frame 220 to enhance contactless communication with the transponder chip module.

**FIG. 2B** is illustrative of a coupling frame 220 substantially surrounding a transponder chip module and having an opening to accommodate the transponder chip module.

Metal payment objects such as metal smart cards feature a cavity to accommodate the transponder chip module TCM. The cavity may not completely penetrate the payment object, or it may be covered from one face by a continuous metal. The transponder chip module may be shielded from the continuous metal layer by magnetic shielding material. This allows the cavity to be concealed. In addition the slit may be concealed by jewels or crystals.

The magnetic shielding may be in the form of a pre-laminated composite material made of beads or flakes of a magnetic material, e.g. iron-based alloy such as Sendust (a ferrite material) within a polymer matrix. Alternatively a sintered block of magnetic material may be used. Any composition of magnetic shielding material may be used so as to reduce (including prevent) attenuation of electromagnetic signal strength and/or compensate for resonance frequency shifts resulting from the metal cavity cover or cavity body.

As discussed in US 20140361086**,** a coupling frame CF is typically a planar element having a opening or cavity in its body, and a slit (or other electrical discontinuity) extending from the opening to a periphery (edge) of the coupling frame CF. The slit makes the coupling frame "open loop". Typically, the coupling frame CF is disposed closely adjacent to a transponder chip module TCM so that the slit S of the coupling frame CF extends generally perpendicular to and over (overlaps) at least a portion the module antenna MA of the transponder chip module TCM. Since the coupling frame is generally coplanar with the transponder chip module, a "central" opening MO in the coupling frame may accommodate a portion of the transponder chip module, such as the mold mass thereof, which may extend into the opening.
For example, FIG. 2C thereof (compare **FIG. 2A** herein) shows a transponder chip module TCM disposed in the card body CB of a smartcard SC wherein the coupling frame CF overlaps (or underlies) the laser-etched antenna structure LES in the transponder chip module TCM. Compare **FIG. 2A** herein.
For example, FIG. 2D thereof (compare **FIG. 2B** herein) shows a transponder chip module TCM disposed in the card body CB of metal smartcard SC, or metal card MC, wherein substantially the entire card body CB comprises metal, and may be referred to as a metal card body MCB.

When properly oriented with respect to the transponder chip module, the coupling frame may enhance communication (including power transfer) between an external contactless reader and the RFID chip (IC) of the transponder chip module. This may be due to the slit or slot in the coupling frame forcing eddy currents in the coupling frame in one direction around the antenna structure (module antenna) of the transponder chip module, thus inducing voltage into the module antenna which provides the power delivery to the chip.

### The Opening In The Coupling Frame

It is noteworthy that, in some of the figures of prior publications discussed above, such as FIGs. 2C and 2D of US 20140361086 there is typically a sizeable opening (module opening MO, central opening CO) in the body of the coupling frame to accommodate the transponder chip module, and the slit S in the coupling frame extends from the opening to an outer edge of the coupling frame. This was driven by the form factor of smart cards and the desire to keep the coupling frame as close as possible to the module antenna. The coupling frame was typically substantially coplanar with the module antenna, and typically surrounded it.

As disclosed herein, a coupling frame CF is a planar (or non-planar, 3D) conductive element having an outer periphery (edge) and having a slit S extending from its outer edge to an inner location on the conductive element. In an RFID device, the coupling frame may be disposed (arranged) to overlap the transponder chip module, and may be oriented (arranged) so that the slit S overlaps (traverses over, or under) the turns (traces) of the module antenna on one side thereof. As distinguished from the coupling frames disclosed for example in **20140361086,** in the coupling frames disclosed herein the inner end of the slit S need not terminate in a distinct opening sized to accommodate the transponder chip module TCM. Essentially, it is the slit rather than the opening that dictates the electrical characteristics of the coupling frame. Some of the coupling frames disclosed herein may be non-planar, including curved or tubular.

### Direct Capacitive Coupling

Direct capacitive coupling of a transponder chip module to an external reader antenna may be achieved. Two electrodes, or capacitive plates (surfaces) may be connected to the RFID chip in a transponder chip module, which may then directly couple to reader antenna at the desired RF frequency (e.g. 13.56 MHz). In effect, the electrodes form an electromagnetic dipole when connected across the chip terminals. In this case the RFID chip may have a modified electronic circuitry in order to allow it to operate via capacitive coupling rather than inductive coupling to a reader antenna.

This concept may be applied to transponder chip modules as disclosed herein and implemented so that dipole electrodes may be substituted for the module antenna and interact with the coupling frame so that with the slit overlapping at least one of the dipole electrodes, contactless communication between the transponder chip module and a contactless reader may be enhanced (enabled), as described herein. The slit in the coupling frame may overlap both of the dipole electrodes to enable/enhance contactless communication. The coupling frame may be positioned so that its slit does not overlap the dipole electrodes to disable/suppress communications between the transponder chip module and the contactless reader (or other RFID device).

### Some Exemplary Dimensions

The following dimensions are approximate, and are presented to provide a sense of the relative scale of the various components of the transponder chip module and other elements of an RFID device which may be described herein.
A transponder chip module, including module antenna and RFID chip - in other words, the module tape for the transponder chip module, may measure approximately 10mm x 10mm, but may have other dimensions and form factors. For example, a transponder chip module may measure approximately 7mm x 15mm, or 7mm x 24mm. The module tape may be an epoxy-glass tape having a thickness of approximately 110µm. A conductive layer (cladding or foil) on one or both sides of the module tape may have a thickness of approximately 18µm or 30µm.
The RFID chip may measure approximately 2.5mm x 2.5mm, but may have other dimensions and form factors.
An etched module antenna may be disposed in a peripheral, rectangular annular area of the module tape having outer dimensions of approximately 10mm x 10mm and inner dimensions of approximately 8mm x 8mm, but may have other dimensions and form factors.
The traces of an etched module antenna may be formed by chemical or laser etching of a conductive layer on the module tape (or a conductive foil applied to the module tape), may have a width of approximately 100µm, and the traces may be separated by spaces having a width of approximately 25 µm, but may have other dimensions and form factors.
The slit in the coupling frame may have a width of between approximately 1.4mm and 2mm, and may cover substantially all of the no-man's land at the interior of the module antenna. The slit, having traversed one side of the module antenna, may be wider than the no-man's land to overlap some inner turns of the antenna on adjacent sides of the module antenna. The slit may have an L-shape, a T-shape or other shape.

### Some Examples of Coupling Frames

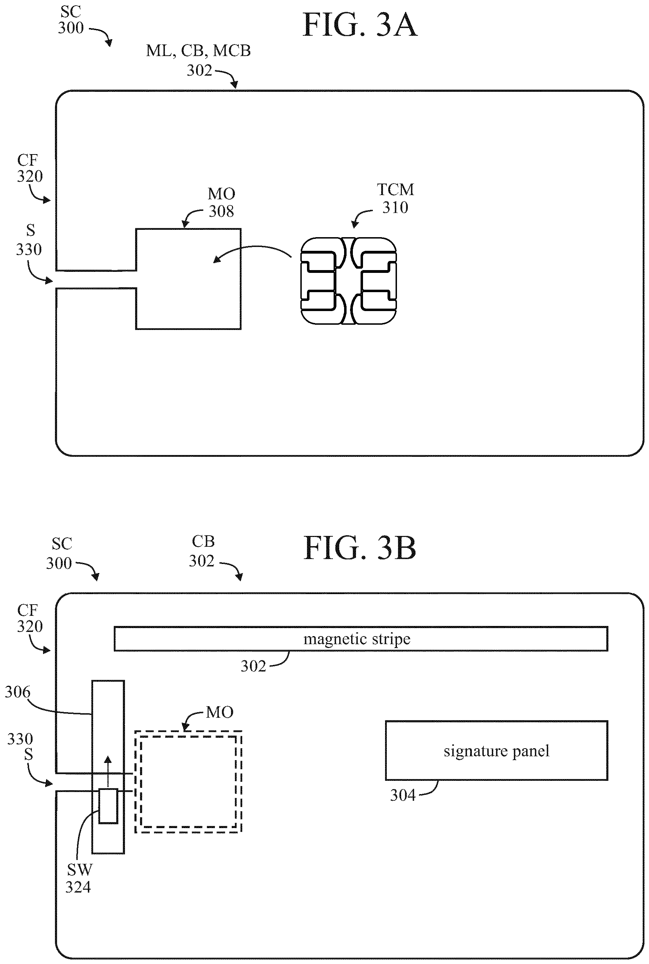

**FIG. 3A** illustrates the front side of a smartcard (SC) 300 which is a metal card having a metal layer (ML), which may constitute substantially the entire thickness of the card body (CB) 302. The card body (CB) may have a module opening (MO) 308 wherein a transponder chip module (TCM) 310 may be disposed, and a slit (S) 330 extending from the module opening (MO) to the outer perimeter of the metal layer (ML) so that the metal card body (MCB) 302 may function as a coupling frame (CF) 320. The metal layer (ML) (or card body CB, or metal card body MCB) may comprise titanium, and is provided with a slit, slot or gap in the metal to create an open loop coupling frame closely adjacent to and substantially fully surrounding the transponder chip module (TCM).

The slit (S) overlaps at least a portion of the module antenna (MA, not shown) of the transponder chip module. In some examples and embodiments of coupling frames incorporated into RFID devices disclosed herein, there may not need to be an opening (MO) in the coupling frame (CF) for the transponder chip module (TCM).

This concept of modifying a metal element to have a slit (S) to function as a coupling frame (CF) may be applied to other products which may have an antenna module (AM) or transponder chip module (TCM) integrated therewith, such as watches, wearable devices, and the like.

The slit (S) may extend completely (fully) through the metal layer (ML) forming the coupling frame (CF). The slit (S) may extend only partially through the metal layer, and remaining material of the metal layer below the slit (S) may have a thickness below a transparency threshold or skin depth for the metal layer. The slit (S) may have a width which is smaller than the opening. The slit (S) may be at least partially filled with an electrically nonconducting material selected from the group consisting of polymer and epoxy resin, reinforced epoxy resin. A reinforcing structure (RS) may be disposed at a location of the slit (S) to reinforce the metal layer (ML).

An activation distance for a transponder chip module (TCM) disposed in (or under, or above) the opening (MO) of the coupling frame may be at least 20 mm; at least 25 mm; at least 30 mm; at least 35 mm; up to 40 mm; and more than 40 mm.

**FIG. 3B** illustrates the back (reverse) side of the smartcard 300 shown in **FIG. 3A****.** A recessed area 302 may be provided on the reverse side of the card body (CB) to accommodate a magnetic stripe, and may measure approximately 9mm x 84mm. Another recessed area 304 may be provided on the reverse side of the card body (CB) to accommodate a signature panel, and may measure approximately 9mm x 56mm. The module opening (MO) is shown in dashed lines, and may measure approximately 11mm x 13mm (for an 8 contact module).

An additional recessed area 306 may be provided on the reverse side of the card body (CB) to accommodate a switch (SW) 324, such as a slide switch, and may measure 5mm x 20mm. The switch (SW) may be used to selectively connect/disconnect the ends of the open loop coupling frame (CF) to one another, so that when the ends are connected, the coupling frame (CF) 320 is a closed loop and does not provide the advantages of an open loop coupling frame (CF) as described above. This allows a user to "switch off" the coupling frame feature and its attendant increase in activation distance, which provides more security (an anti-phishing feature) for the user's card. Shorting out the slit (S) may substantially suppress (including disable) communication between the transponder chip module and another RFID device such as a contactless reader. The switch may comprise any conductive medium (such as a tab or a membrane) capable of selectively short-circuiting the slit. As disclosed herein, a second coupling frame in intimate contact with a first coupling frame can act as a switch, when moved so that it short circuits the slit in the first coupling frame.

The switch feature can be integrated into a solid metal card body construction. The switch may comprise a slide switch, a press button switch or the like which can be used to short-circuit the coupling frame (CF) and dampen the function of the transponder chip module (TCM), thereby providing protection against phishing (unauthorized reading of the smartcard). The switch (SW) can also have the function of reinforcing the structure of the card body (CB) around the position of slot or slit, protecting it from damage resulting from bending.

A switch SW can be incorporated in other RFID devices disclosed herein to short out the slit, slot or gap in the coupling frame. The switch may comprise a slide switch, a press button switch or the like which can be used to short-circuit the coupling frame and dampen the function of the transponder chip module, thereby providing protection against phishing (unauthorized reading of the smartcard). The switch can also have the function of reinforcing the structure of a card body around the position of the slit, protecting it from damage resulting from bending.

### LEDs

US 20140361086 and US 20150021403 show (refer to FIG 7A therein) incorporating an LED into a smart card (SC), and connecting it to the ends of the coupling frame (CF). The LED is shown as being connected across the slit (S), and may illuminate when the smartcard (SC) is being interrogated by an external reader.

A coupling frame may feature connection to LED in combination with a switch or second coupling frame. The LED will light or blink when the switch is open (open slit) and the device is placed in proximity with an RF reader field at the operating frequency (e.g. 13.56 MHz). When the coupling frame slit is shorted out, the LED will not light giving a visual indication to the user that the device has been disabled and that no data communication can occur with the transponder chip module.

### The slit or discontinuity

The operation of a coupling frame (CF) benefits from the presence of a discontinuity, herein a slit (S), extending into the surface of and across the coupling frame from an outer edge thereof, so that the coupling frame is not a closed loop. The discontinuity in the coupling frame (CF) may be implemented by creating an electrically insulating region in the metal layer, nanomaterial or other conductor of the coupling frame (CF). The discontinuity may be formed by a series of perforations. The discontinuity may also be formed by selective chemical (or other) modification of the metal, nanomaterial or other conductor, resulting in a non-conductive stripe rather than a slit through the surface of the coupling frame. The chemical modification may form an electrically insulating region on the coupling frame (CF) which serves as the discontinuity. For example, the discontinuity may be formed by selective oxidation of the coupling frame (CF) by deposition (for example by screen printing, inkjet) of a corrosive chemical (for example acid). For example, a coupling frame formed from a thin foil of aluminum may have a non-conductive stripe formed therein, such as by anodising. See, for example US 20100078329 (Mirsky et al.).

A discontinuity which is a slit (S) may compromise the mechanical integrity of the otherwise continuous coupling frame, which may necessitate the presence of a backing member (such as a module tape, or inlay substrate). A slit (S) can be filled with a material to restore some of the mechanical integrity to the metal layer of the coupling frame, and may also add to the aesthetic appearance of the coupling frame (if it is visible in the final product). The material may be electroluminescent, so that it changes appearance when the coupling frame (and overall device) is in proximity with an external reader. A patch may extend across the slit of the coupling frame. A discontinuity wherein a narrow region or "stripe" of the metal layer of the otherwise electrically conductive coupling frame is converted (chemically, or otherwise) to a material (such as an oxide of the metal) that is electrically non-conductive may serve the same purpose as the slit, but without compromising the mechanical integrity of the coupling frame. This may be important in situations where the coupling frame comprises a mechanical element of an overall device, such as the housing of a wristwatch.

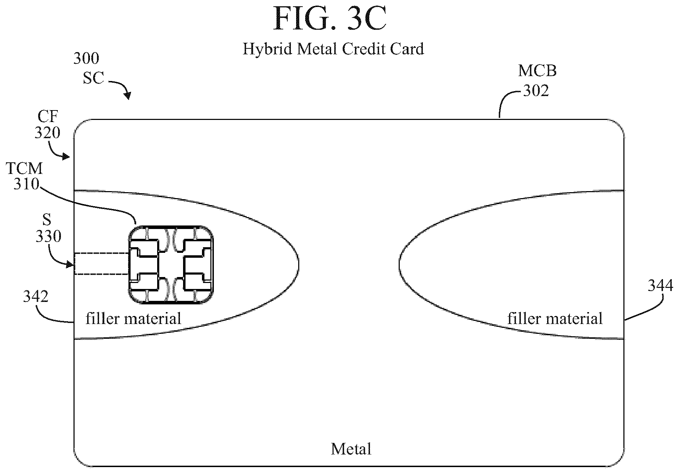

**FIG. 3C** illustrates a design of a hybrid metal credit card (or smart card) 300. The card body (CB) 302 is largely composed of metal (and is referred to as a metal card body MCB), this may be a precious or high density metal such as silver, titanium, tungsten or a high strength metal such as stainless steel, and may comprise a non-precious metal plated with a precious metal. The card body (CB) features a slit (S, dashed lines) 330 extending from an edge of the card body (CB) through the position of the transponder chip module (TCM) 310 so that the slit overlaps the module antenna thereof and the card body (CB) functions as a coupling frame (CF) 320. The metal card body (CB, MCB) may have one or more recesses 342, 344 in the front and/or rear face of the card. These recesses may be filled with implanted or laminated non-conductive filler materials such as ceramic, plastic, glass, wood etc. The filled recesses may be, for example, 50% of the depth of the card thickness. These filled recesses serve as decorative elements on the card. In particular at the module position they serve to conceal the slit (S) in the card and allow a neat implanting of the module into the card body. In addition, the use of a recess filled with non-conductive material surrounding the transponder chip module may mitigate the effects of electrostatic discharge (ESD) when inserting the card into payment terminals or ATM machines, as the fill material for the recess may have a high dielectric constant and hence protect the transponder chip module from static discharges.

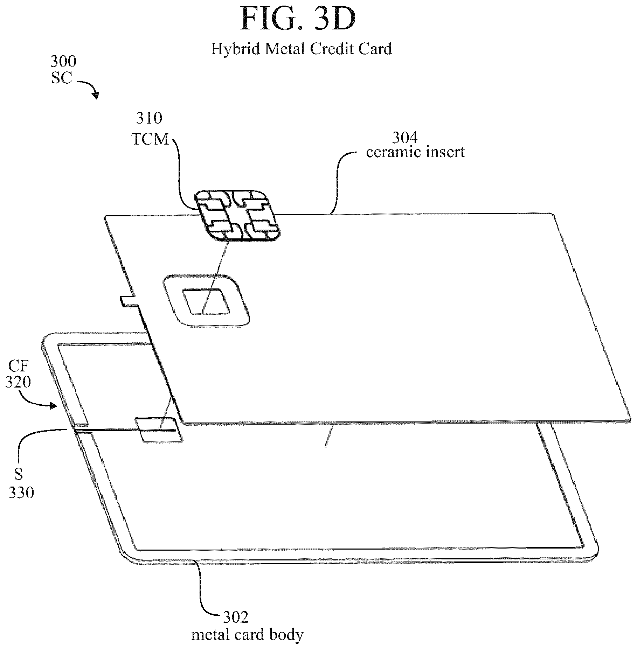

**FIG. 3D** illustrates a design of a hybrid ceramic and metal smart card (SC) 300. The card body (CB) 302 is made of solid metal and features a slit (S) 330 at the position of the transponder chip module (TCM) 310. The card body with slit functions as a coupling frame (CF) 320, with the slit overlapping the module antenna of the transponder chip module. The metal card body features a recess that may cover most of the size of the card and extend around the slit position to the periphery of the card. This recess is filled by gluing or laminating a moulded or cut ceramic insert 304. This allows the card to retain the mechanical strength of the metal (e.g. stainless steel, titanium, tungsten) and have the aesthetic appearance and appeal of a polished ceramic finish.

### "Capacitive Touch"

A person holding an RFID device having a coupling frame (CF) with a transponder chip module (TCM), such as a contactless or dual interface metal card operating on the principle of capacitive coupling, may act as a capacitive element when close to the reader antenna (e.g., in a point of sale terminal). As the person is grounded, the person has a resistance to ground and acts as a capacitive element in the overall circuit, and their body can act as an "antenna", augmenting the read/write distance from the contactless or DIF metal card with the POS.

### Metal Card with Reinforcing Insert

A slit through a metal card body (so that it functions as a coupling frame) of a metal card may compromise (substantially weaken) the mechanical integrity of the card, allowing for undesirable flexing at the slit. A reinforcing insert may be disposed across the slit, and may comprise an electrically insulating material that conceals the slit (between the opposed ends of the coupling frame) and cavity (for the transponder chip module). The reinforcing insert may function to mechanically stabilize the metal card, reducing flexing. The reinforcing insert can bear a logo or printed image. The reinforcing insert may be reinforced with segments of electrically isolated metal, glass fiber or carbon fiber, for example, to add rigidity and strength.

The introduction of a slit and cavity near the transponder chip module area inherently weakens the structure of the metal card allowing flexing and bending. The reinforcing insert may be designed in such a way as to reinforce the card. The reinforcing insert may feature tapered edges that match tapered edges on the milled recess of the card body. This allows a mechanical grip between the insert and the card body which increases the rigidity of the metal card across the region bearing the slit and cavity. In addition an adhesive may be used to bond the reinforcing insert to the card body. As an alternative to tapered edges, slotted edges in for example a T-shape may be used.

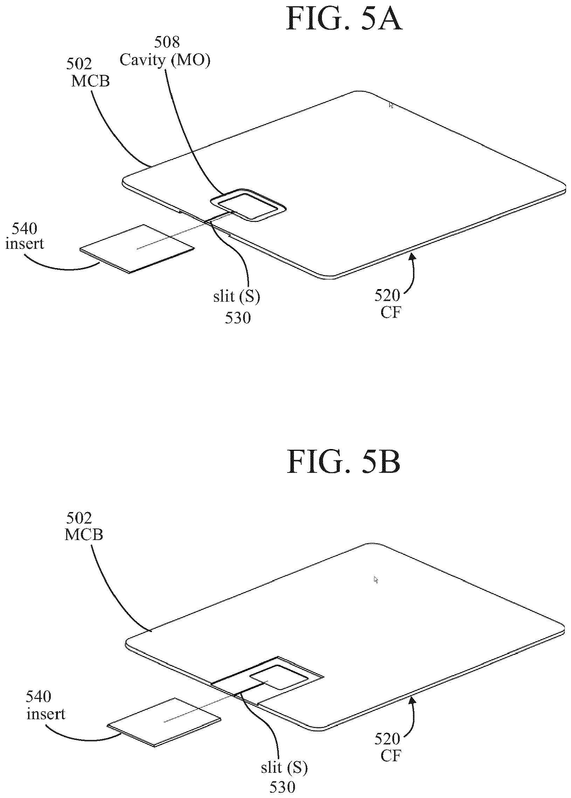

**FIGs. 5A****,B** are two views (front and back) of a metal card body (MCB) 502 having a cavity (MO) 508 which is an opening for the transponder chip module (not shown) and a slit (S) 530 extending from the cavity to an outer edge of the metal card body. A reinforcing insert 540 is shown inserted into the card body at the position of the slit S.

Reference is made to FIG. 8 of US 20150021403**,** the priority of which the present application claims, which shows a metal smart card (SC) 800 comprising a full metal card body (CB) 802 with an opening (MO) 808 for a transponder chip module (TCM, not shown) and a slit (S) 830 extending from the opening (MO) to a periphery of the card body (CB) to allow the flux lines to propagate around the area of the transponder chip module (TCM). The full metal card body (CB) may be formed of an electrically conductive material, such as titanium, may have a thickness of 760µm, and may act a coupling frame (CF) for capacitive coupling with a contactless reader or point of sale terminal. The card body (CB) may comprise conductive nanoparticles.

To reinforce the card body (CB) (or metal layer (ML)) having a slit (S), a reinforcing insert (or structure or plate), of a non-conductive material such as plastic or reinforced plastic, may be disposed at (including around and covering) the location (area) of the slit (S) in a recess (R, not shown) on the underside of the card body (CB), and may extend beyond the slit. For example, the slit (S) may be 50µm wide, the reinforcing structure may be up to or more than 8000µm wide (approximately the size of a side of the TCM). The reinforcing structure (RS) may have a logo or design. The thickness of the reinforcing structure (and corresponding depth of the recess R on the underside of the card body CB) may be 350µm. The opening (MO) may extend completely through the card body (CB) and the transponder chip module (TCM) may extend through the opening (MO) to the underside of the card body (CB) to allow the propagation of the electromagnetic flux lines.

### Cavity with Struts

Normally, the cavity or opening in a metal card body MCB extends completely through the card body, so that an antenna module AM or a transponder chip module TCM inserted into the cavity/opening can interact contactlessly (via RF) with an external reader. Having an insert to reinforce the card body at the position of the slit S is discussed above. A metal card body may have a thickness of approximately 800µm (0.8mm).

A metal card body (MCB) which has been modified to perform as a coupling frame (CF) may have a slit (S) that extends not only to an area (recess R or cavity MO) for the transponder chip module (TCM), but which extends further across the area for the transponder chip module.

A partial milled or etched cavity may be used to accommodate the transponder chip module TCM, as per a normal (plastic) smartcard. The slit S would extend through the entire card body MCB, providing the discontinuity in the coupling frame CF. The use of a slit S through the card body rather than a fully penetrating cavity (module opening) at the transponder chip module TCM in metal card may increase the mechanical strength / integrity of the metal card.

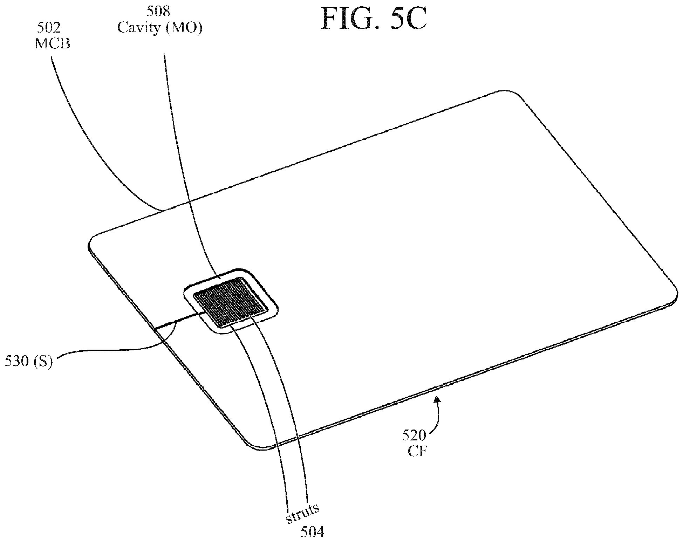

**FIG. 5C** shows a metal card body (MCB) 502 having a cavity (MO) 508, but rather than the cavity being entirely open at the bottom of the card body, portions of the metal card body which may be referred to as struts 504 may be left in place, spanning the cavity, to reinforce the card body. The struts 504 may be disposed perpendicular to the slit S.

### Some Additional Disclosure

There follows some evolutions and applications for some of the concepts disclosed herein relating to coupling frames having slits. Some concepts that may be disclosed may include, but are not limited to:
- inserts for the metal cards
- incorporating an LED into a smart card or, more generally, a payment object

### Incorporating an LED into a Smart Card

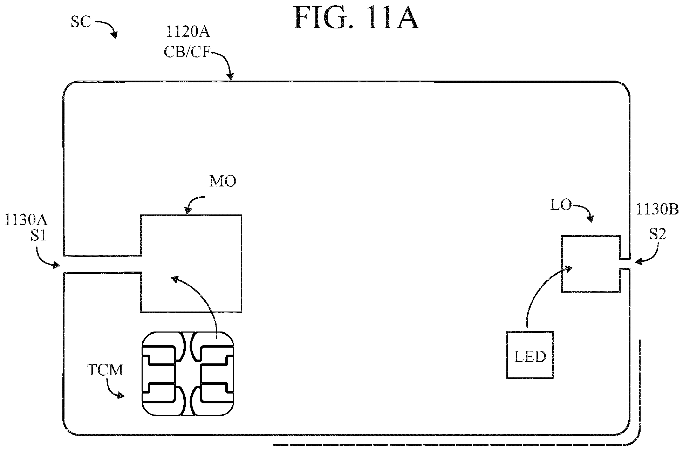

**FIG. 11A** shows a smart card (SC) having a metal card body (CB) formed with an opening (MO) for a transponder chip module (TCM), a slit (S1) 1130A extending from the opening to an edge (left, as viewed) of the metal care body, turning the card body into a coupling frame (CF) 1120A. The opening MO is at the position prescribed by the ISO standard (near the left edge of the card body (CB)).

Another opening (LO) is formed on an opposite side of the metal card body and also has a slit (S2) 1130B extending from the opening to the edge (right, as viewed) of the card body/coupling frame (CB/CF). An LED is disposed in the opening (LO) and connected to the card body/coupling frame (CB/CF) across the slit (S2).

This arrangement provides a transponder chip module (TCM) with an LED on opposite sides (left-right) of a card body of a smart card, which is a metal smart card. In this example, a single coupling frame CF may have enough power to illuminate the LED while still providing enough power to activate and operate the RFID chip in the transponder chip module (TCM).

Regarding incorporating LEDs into RFID devices such as payment objects, it may be noted that **FIG. 7A** of US 20140361086 shows incorporating an LED into the smart card (SC), and connecting it to the ends of the coupling frame (CF).

### Multiple Slits And Different Shaped Slits

A payment object has a slit and functions as a coupling frame for a transponder chip module incorporated into the payment object. The slit of the coupling frame may describe an arbitrary path extending from one edge of the payment object, and may be straight, or it may have an L-shape or a T-shape. The slit may be linear (straight) or non-linear. More than one slit may be used to operate with a given transponder chip module TCM.

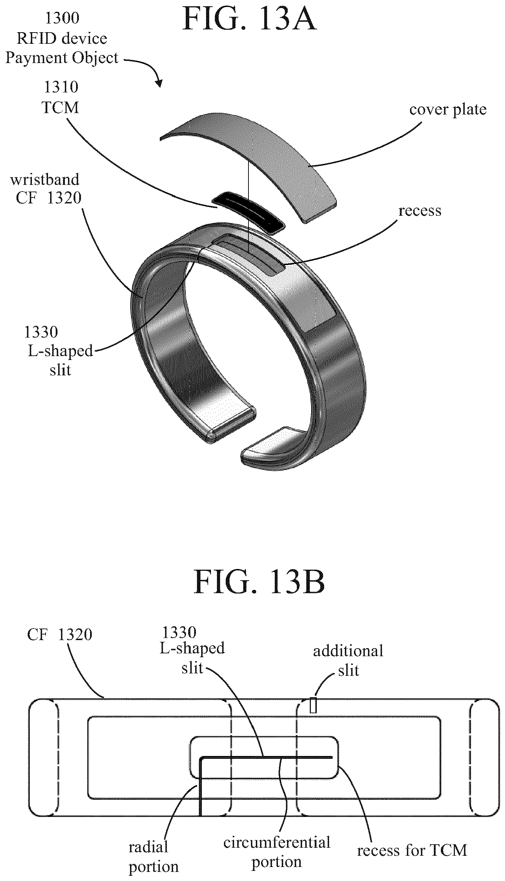

**FIGs. 13A** (perspective view) and **13B** (top plan view) illustrates an RFID device, such as a payment object 1300, in the form of a bracelet (or wristband). The example is not claimed but is illustrative for a slit being L-shaped. A transponder chip module (TCM) 1310 having a module antenna may be inserted into a recess in an outer surface of the wristband. A cover plate may cover the recess, with the transponder chip module inside.

An L-shaped slit (S) 1330 is shown extending generally axially from an outer edge of the wristband, to within the recess for the transponder chip module TCM, then continuing in a circumferential direction across the area/recess for the transponder chip module TCM, so that the wristband may function as a coupling frame 1320. The radial portion of the slit S may be very narrow, and the circumferential portion of the slit S may be wider. An L-shaped slit may extend across (overlap) one side of the module antenna, and in "no-man's land" may extend to an adjacent side of the module antenna. An additional slit (not shown) may be disposed on side edge of the wrist band opposite to the radial portion of the slit, for aesthetic purposes (to provide some symmetry).

The module antenna MA (not shown) may be elongated in the circumferential direction, and aligned (such as parallel) with the circumferential portion of the slit.

### Counter-Windings

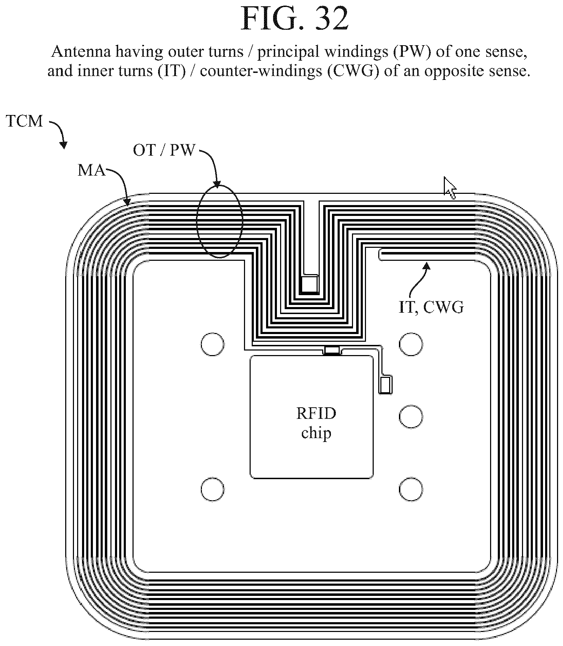

**FIG. 32** shows a transponder chip module (TCM) having a module antenna (MA). The traces or windings of the module antenna may be wound or formed in a particular direction, or sense. When viewed in elevation the planar traces or windings may be formed in a clockwise or anti-clockwise (counter-clockwise) direction. Traces or windings wound or formed in a particular direction, or sense, composing the majority of the turns of the antenna may be referred to as principal windings (PWs). One or more antenna windings may be formed in an opposite direction, or sense, to the principal windings (PWs) of the antenna. A winding of this type may be referred to as a counter winding (CWG). For example, there may be 8-12 principal windings and 1-3 counter windings. The counter windings may be connected in series with the principal windings. The counter windings may be located between the principal windings. The track width of the counter windings may be different than the track width of the principal windings, such as wider than the principal windings. The counter windings may have a different sense (laying direction) than the principal windings. The length and width of the counter windings may be controlled to determine resistance, capacitance effects and RF characteristics of the module antenna. The implementation of one or more counter windings (CWGs) in a transponder chip module (TCM) allows control of the resonance frequency of the module antenna (MA), in particular increasing the resonance frequency.

## Claims

1. A hybrid metal smartcard (SC, 300) comprising:
a metal card body (MCB, 302, 502), featuring a slit (S, 330, 530) so that the metal card body functions as a coupling frame (CF, 320), the slit extending from an outer edge of the metal card body to an inner position thereof so that the slit overlaps at least a portion of a module antenna of a transponder chip module (TCM, 310) when disposed in the smartcard;
one or more recesses (342, 344) in a front and/or a rear face of the smartcard; and
a non-conductive filler material filling the one or more recesses (304, 540).

2. The hybrid metal smartcard of claim 1, wherein:
the metal is selected from the group consisting of silver, titanium, tungsten, stainless steel, and a non-precious metal plated with a precious metal.

3. The hybrid metal smartcard of claims 1 or 2, wherein:
the filler material is implanted or laminated into the one or more recesses.

4. The hybrid metal smartcard of any of the preceding claims, wherein:
the filler material is selected from the group consisting of ceramic, plastic, glass and wood.

5. The hybrid metal smartcard of claim 1, wherein:
the filler material serves as a decorative element.

6. The hybrid metal smartcard of claim 1, wherein:
the filler material conceals the slit.

7. The hybrid metal smartcard of claim 1, wherein:
the filler material mitigates effects of electrostatic discharge.

8. The hybrid metal smartcard of claim 1, wherein:
the filler material is a moulded or cut ceramic insert (304, 540) filling the one or more recesses.

9. The hybrid metal smartcard of any of the preceding claims, wherein:
the one or more recesses are 50 % of a depth of a thickness of the metal card body.

10. The hybrid metal smartcard of any of the preceding claims, wherein:
the one or more recesses cover most of the metal card body.

11. The hybrid metal smartcard of claim 10, wherein:
the one or more recesses extend from around a slit position to a periphery of the smartcard.

12. The hybrid metal smartcard of any of the preceding claims, further comprising:
the transponder chip module (TCM, 310) having the module antenna (MA) and being disposed in an opening (MO, 308) in the smartcard.

13. The hybrid metal smartcard of claim 12, wherein:
the transponder chip module further comprises contact pads (CP) so that the transponder chip module can function with dual interfaces.

14. The hybrid metal smartcard of claim 12, wherein the module antenna has several turns in form of traces or windings which are formed in a clockwise or anti-clockwise direction, wherein a majority of the turns are principal windings (PW) and are formed in a particular direction and wherein one or more turn is a counter winding (CWG) and is formed in an opposite direction to the principal windings.

15. The hybrid metal smartcard of claim 1, wherein the slit is straight, non-linear, L-shaped, or T-shaped.

16. The hybrid metal smartcard of claim 1, wherein a switch (SW, 324) is incorporated to short-circuit the coupling frame (CF, 320).

17. The hybrid metal smartcard of claim 1, wherein the metal card body (MCB) has a cavity (MO), but rather than the cavity being entirely open at a bottom, portions of the metal card body in form of struts (504) are left in place, spanning the cavity, to reinforce the metal card body, wherein preferably the struts are disposed perpendicular to the slit.

18. The hybrid metal smartcard of claim 1, wherein a second opening (LO) is formed on a side of the metal card body being opposite to a module opening (MO) in the metal card body, the second opening having a second slit (S2, 1130B) extending from the second opening to the outer edge of the metal card body, and wherein a light emitting diode (LED) is disposed in the second opening and is connected to the metal card body across the second slit.

## Patentansprüche

1. Hybride Metallchipkarte (SC, 300) umfassend:
einen metallenen Kartenkörper (MCB, 302, 502) mit einem Schlitz (S, 330, 530), so dass der metallene Kartenkörper als ein Kopplungsrahmen (CF, 320) fungiert, wobei sich der Schlitz von einer äußeren Kante des metallenen Kartenkörpers bis zu einer Position im Inneren desselben erstreckt, so dass der Schlitz wenigstens einen Teil einer Modulantenne eines Transponderchipmoduls (TCM, 310) überlappt, wenn es in die Chipkarte eingesetzt ist;
eine oder mehrere Aussparungen (342, 344) auf einer Vorderseite und/oder einer Rückseite der Chipkarte; und
ein nicht leitendes Füllmaterial, das eine oder mehrere der Aussparungen (304, 540) ausfüllt.

2. Hybride Metallchipkarte nach Patentanspruch 1, wobei das Metall ausgewählt ist aus der Gruppe, bestehend aus Silber, Titan, Wolfram, Edelstahl und einem Nichtedelmetall, das mit einem Edelmetall überzogen ist.

3. Hybride Metallchipkarte nach Patentanspruch 1 oder 2, wobei das Füllmaterial in die eine oder in die mehreren Aussparungen implantiert oder laminiert worden ist.

4. Hybride Metallchipkarte nach einem der vorstehenden Patentansprüche, wobei das Füllmaterial ausgewählt ist aus der Gruppe, bestehend aus Keramik, Kunststoff, Glas und Holz.

5. Hybride Metallchipkarte nach Patentanspruch 1, wobei das Füllmaterial als ein dekoratives Element dient.

6. Hybride Metallchipkarte nach Patentanspruch 1, wobei das Füllmaterial den Schlitz verdeckt.

7. Hybride Metallchipkarte nach Patentanspruch 1, wobei das Füllmaterial die Auswirkungen elektrostatischer Entladung mildert.

8. Hybride Metallchipkarte nach Patentanspruch 1, wobei das Füllmaterial ein geformter oder zugeschnittener Keramikeinsatz (304, 540) ist, der die eine oder die mehreren Aussparungen ausfüllt.

9. Hybride Metallchipkarte nach einem der vorstehenden Patentansprüche, wobei der eine oder die mehreren Aussparungen 50 % einer Tiefe einer Dicke des metallenen Kartenkörpers ausmachen.

10. Hybride Metallchipkarte nach einem der vorstehenden Patentansprüche, wobei der eine oder die mehreren Aussparungen das Meiste des metallenen Kartenkörpers bedecken.

11. Hybride Metallchipkarte nach Patentanspruch 10, wobei der eine oder die mehreren Aussparungen sich von einer Schlitzposition herum zu einem Rand der Chipkarte erstrecken.

12. Hybride Metallchipkarte nach einem der vorstehenden Patentansprüche, weiter umfassend das Transponderchipmodul (TCM, 310) mit der Modulantenne (MA) und in eine Öffnung (MO, 308) in der Chipkarte eingesetzt.

13. Hybride Metallchipkarte nach Patentanspruch 12, wobei das Transponderchipmodul weiter Kontaktflächen (CP) umfasst, so dass das Transponderchipmodul mit zwei Schnittstellen arbeiten kann.

14. Hybride Metallchipkarte nach Patentanspruch 12, wobei die Modulantenne etliche Windungen in Form von Spuren oder Wicklungen hat, die in einem Uhrzeigersinn oder gegen den Uhrzeigersinn ausgebildet worden sind, wobei eine Mehrheit der Windungen Hauptwicklungen (PW) sind und in eine bestimmte Richtung ausgebildet sind, und wobei eine oder mehrere Windungen eine Gegenwicklung (CWG) ist und in einer zu den Hauptwindungen entgegengesetzten Richtung ausgebildet ist.

15. Hybride Metallchipkarte nach Patentanspruch 1, wobei der Schlitz gerade, nicht linear, L-förmig oder T-förmig ist.

16. Hybride Metallchipkarte nach Patentanspruch 1, wobei ein Schalter (SW, 324) eingebaut ist, um den Kopplungsrahmen (CF, 320) kurzzuschließen.

17. Hybride Metallchipkarte nach Patentanspruch 1, wobei der metallene Kartenkörper (MCB) einen Hohlraum (MO) hat, wobei jedoch, statt dass der Hohlraum an einem Boden vollständig offen ist, Teile des metallenen Kartenkörpers in Form von Streben (504) an Ort und Stelle belassen worden sind, die den Hohlraum überspannen, um den metallenen Kartenkörper zu verstärken, wobei die Streben vorzugsweise rechtwinklig zu dem Schlitz angeordnet sind.

18. Hybride Metallchipkarte nach Patentanspruch 1, wobei eine zweite Öffnung (LO) an einer Seite des metallenen Kartenkörpers, welche sich gegenüber einer Modulöffnung (MO) in dem metallenen Kartenkörper befindet, ausgebildet ist, wobei die zweite Öffnung einen zweiten Schlitz (S2, 1130B) hat, der sich von der zweiten Öffnung zu der äußeren Kante des metallenen Kartenkörpers erstreckt, und wobei eine Licht emittierende Diode (LED) in der zweiten Öffnung angeordnet ist und mit dem metallenen Kartenkörper quer über den zweiten Schlitz hinweg verbunden ist.

## Revendications

1. Carte à puce hybride en métal (SC, 300) comprenant :
un corps de carte en métal (MCB, 302, 502), comprenant une fente (S, 330, 530) si bien que le corps de carte en métal fonctionne comme un cadre de couplage (CF, 320), la fente s'étendant à partir d'un bord extérieur du corps de carte en métal vers une position intérieure de celui-ci si bien que la fente chevauche au moins une portion d'une antenne à module d'un module de puce de transpondeur (TCM, 310) lorsqu'il est placé dans la carte à puce ;
un ou plusieurs évidements (342, 344) dans la face avant et/ou arrière de la carte à puce et
un matériau de remplissage non conducteur qui remplit le ou les évidements (304, 540).

2. Carte à puce hybride en métal selon la revendication 1, cependant que le métal est sélectionné dans le groupe comprenant d'argent, de titane, de tungstène, d'acier inoxydable et un métal non précieux plaqué avec un métal précieux.

3. Carte à puce hybride en métal selon la revendication 1 ou 2, cependant que le matériau de remplissage est implanté ou laminé dans le ou les évidements.

4. Carte à puce hybride en métal selon l'une quelconque des revendications précédentes, cependant que le matériau de remplissage est sélectionné dans le groupe comprenant de céramique, de plastique, de verre et de bois.

5. Carte à puce hybride en métal selon la revendication 1, cependant que le matériau de remplissage sert d'élément décoratif.

6. Carte à puce hybride en métal selon la revendication 1, cependant que le matériau de remplissage dissimule la fente.

7. Carte à puce hybride en métal selon la revendication 1, cependant que le matériau de remplissage atténue des effets d'une décharge électrostatique.

8. Carte à puce hybride en métal selon la revendication 1, cependant que le matériau de remplissage est un insert de céramique moulé ou coupé (304, 540) qui remplit le ou les évidements.

9. Carte à puce hybride en métal selon l'une quelconque des revendications précédentes, cependant que le ou les évidements sont de 50% d'une profondeur d'une épaisseur du corps de carte en métal.

10. Carte à puce hybride en métal selon l'une quelconque des revendications précédentes, cependant que le ou les évidements recouvrent une plupart du corps de carte en métal.

11. Carte à puce hybride en métal selon la revendication 10, cependant que le ou les évidements s'étendent depuis autour d'une position de la fente jusqu'à une périphérie de la carte à puce.

12. Carte à puce hybride en métal selon l'une quelconque des revendications précédentes comprenant de plus le module de puce de transpondeur (TCM, 310) qui a l'antenne à module (MA) et qui est placé dans une ouverture (MO, 308) dans la carte à puce.

13. Carte à puce hybride en métal selon la revendication 12, cependant que le module de puce de transpondeur comprend de plus des plots de contact (CP) si bien que le module de puce de transpondeur peut fonctionner avec des doubles interfaces.

14. Carte à puce hybride en métal selon la revendication 12, cependant que l'antenne à module a plusieurs spires en forme de traces ou d'enroulements qui sont formés dans un sens des aiguilles d'une montre ou un sens inverse, cependant qu'une majorité des spires sont des enroulements principaux (PW) et sont formés dans une direction particulière et cependant qu'une ou plusieurs spires est un enroulement contraire (CWG) et est formé dans une direction opposée aux enroulements principaux.

15. Carte à puce hybride en métal selon la revendication 1, cependant que la fente est droite, non linéaire, en forme de L ou en forme de T.

16. Carte à puce hybride en métal selon la revendication 1, cependant qu'un commutateur (SW, 324) est incorporé pour court-circuiter le cadre de couplage (CF, 320).

17. Carte à puce hybride en métal selon la revendication 1, cependant que le corps de carte en métal (MCB) a une cavité (MO) mais plutôt que la cavité est entièrement ouverte sur un fond, des portions du corps de carte en métal en forme d'entretoises (504) sont laissées en place, surplombant la cavité, pour renforcer le corps de carte en métal, cependant que de préférence les entretoises sont disposées perpendiculaires à la fente.

18. Carte à puce hybride en métal selon la revendication 1, cependant qu'une seconde ouverture (LO) est formée sur un côté du corps de carte en métal qui est opposé à une ouverture de module (MO) dans le corps de carte en métal, la seconde ouverture ayant une seconde fente (S2, 1130B) qui s'étend de la seconde ouverture au bord extérieur du corps de carte en métal et cependant qu'une diode électroluminescente (LED) est disposée dans la seconde ouverture et est connectée au corps de carte en métal à travers la seconde fente.
